(19) Europäisches Patentamt
European Patent Office
Office européen des brevets

(11) **EP 1 734 769 B1**

(12) **EUROPEAN PATENT SPECIFICATION**

(45) Date of publication and mention
of the grant of the patent:
**06.01.2010 Bulletin 2010/01**

(51) Int Cl.:
*H04N 7/26* (2006.01)

(21) Application number: **06115313.6**

(22) Date of filing: **12.06.2006**

(54) **An encoder and encoding method for motion estimation**

Kodiereinrichtung und Verfahren zur Kodierung der Bewegungsschätzung.

Encodeur et méthode de codage pour l'estimation de mouvement.

(84) Designated Contracting States:
**DE FR GB NL**

(30) Priority: **14.06.2005 US 690131 P**
**20.04.2006 KR 2006035906**

(43) Date of publication of application:
**20.12.2006 Bulletin 2006/51**

(73) Proprietor: **Samsung Electronics Co., Ltd.**
**Suwon-si,**
**Gyeonggi-do 442-742 (KR)**

(72) Inventors:
• **Kwon, Nyeong-kyu**
**105-102 Donga Apt.**
**Daejeon, Metropolitan (KR)**
• **Baik, Hyun-ki**
**1208-2103 Mujigae Maeul Jugong**
**Seongnam-si**
**Gyeonggi-do (KR)**

(74) Representative: **Walaski, Jan Filip et al**
**Venner Shipley LLP**
**20 Little Britain**
**London**
**EC1A 7DH (GB)**

(56) References cited:
• SUH, J.W.; JECHANG JEONG: "Fast sub-pixel motion estimation techniques having lower computational complexity" IEEE TRANSACTIONS ON CONSUMER ELECTRONICS, [Online] vol. 50, no. 3, 1 August 2004 (2004-08-01), pages 968-973, XP002396605 Retrieved from the Internet: URL:http://ieeexplore.ieee.org/iel5/30/295 62/01341708.pdf?tp=&arnumber=1341708&isnum ber=29562> [retrieved on 2006-08-28]
• XIAOMING LI ET AL: "A Locally Quadratic Model of the Motion Estimation Error Criterion Function and Its Application to Subpixel Interpolations" February 1996 (1996-02), IEEE TRANSACTIONS ON CIRCUITS AND SYSTEMS FOR VIDEO TECHNOLOGY, IEEE SERVICE CENTER, PISCATAWAY, NJ, US , XP011014284 ISSN: 1051-8215 * pages 119-121 *
• CHENG DU ET AL: "PPHPS: A Parabolic Prediction-Based, Fast Half-Pixel Search Algorithm for Very Low Bit-Rate Moving-Picture Coding" IEEE TRANSACTIONS ON CIRCUITS AND SYSTEMS FOR VIDEO TECHNOLOGY, IEEE SERVICE CENTER, PISCATAWAY, NJ, US, vol. 13, no. 6, June 2003 (2003-06), XP011071958 ISSN: 1051-8215
• SENDA Y ET AL: "Theoretical background and improvement of a simplified half-pel motion estimation" 16 September 1996 (1996-09-16), PROCEEDINGS OF THE INTERNATIONAL CONFERENCE ON IMAGE PROCESSING (ICIP) LAUSANNE, SEPT. 16 - 19, 1996, NEW YORK, IEEE, US, PAGE(S) 263-266 , XP010202381 ISBN: 0-7803-3259-8 * the whole document *

- **JING-FU CHANG ET AL: "A Quadratic Prediction Based Fractional-Pixel Motion Estimation Algorithm for H.264" 12 December 2005 (2005-12-12), MULTIMEDIA, SEVENTH IEEE INTERNATIONAL SYMPOSIUM ON IRVINE, CA, USA 12-14 DEC. 2005, PISCATAWAY, NJ, USA, IEEE, PAGE(S) 491-498 , XP010870573 ISBN: 0-7695-2489-3 * pages 2-4 ***

- **KWON D N ET AL: "Sub-pixel accuracy motion estimation using linear approximate model of the error criterion function" 24 August 2005 (2005-08-24), COMMUNICATIONS, COMPUTERS AND SIGNAL PROCESSING, 2005. PACRIM. 2005 IEEE PACIFIC RIM CONFERENCE ON VICTORIA, BC, CANADA 24-26 AUG., 2005, PISCATAWAY, NJ, USA,IEEE, PAGE(S) 261-264 , XP010841453 ISBN: 0-7803-9195-0 * page 262 - page 263 ***

**Description**

The present invention relates to encoding a video signal, and more particularly, to encoding a video signal with improved compression efficiency using model switching in motion estimation of a sub-pixel.

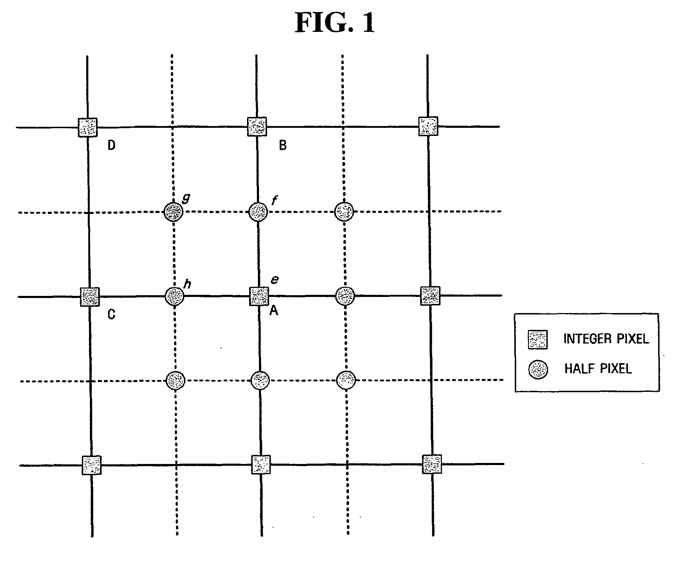

In video compression techniques, in order to compress a macroblock of a current frame utilizing temporal similarity of adjacent frames, the most similar areas are searched for among previous frames. This process is called a motion estimation process. Among the previous frames associated with the motion estimation process, vectors pointing to the most similar areas obtained through the motion estimation process are called motion vectors. To determine regional similarity between a block of the current picture and an adjacent block, a difference between regions, called a block matching error, is measured. In measuring the block matching error, a variety of techniques are used, including a sum of absolute difference (SAD) technique, a mean of absolute difference technique (MAD), a mean of square error (MSE) technique, and so on. As the difference between two blocks becomes smaller, the two blocks are considered as being more similar. Meanwhile, to increase video compression efficiency, motion vectors in units of sub-pixels such as half pixels or quarter pixels are used. FIG. 1 shows a half pixel calculation method for each integer pixel.

FIG. 1 illustrates conventional integer pixels and half pixels. A half pixel (e, f, g, h) can be obtained using an integer pixel (A, B, C, D) according to Equation 1 given below as:

$$[\text{Equation 1}]$$
$$e = A$$
$$f = (A+B+1)/2$$
$$g = (A+B+C+D+2)/4$$
$$h = (A+C+1)/2$$

Half pixel values can be estimated through values of neighbouring integer pixels, and quarter pixel values can be estimated by searching values of neighbouring half pixels or neighbouring integer pixels. As the accuracy of a half pixel motion vector or a quarter pixel motion vector increases, a number of search points required for motion estimation increases. Accordingly, a computational amount sharply increases.

To address this, there have been proposed model-based sub-pixel motion vector estimation techniques, in which an error between neighbouring points corresponding to a sub-pixel motion vector is calculated using models for blocks corresponding to integer pixel motion vectors without computing the block error of the sub-pixel motion vector.

Examples of such methods are the ones disclosed in the following literature related to motion estimation techniques for video compression:

SUH, J.W.; JECHANG JEONG: "Fast sub-pixel motion estimation techniques having lower computational complexity" IEEE Transaction on Consumer Electronics vol. 50, no. 3, 1 August 2004 (2004-08-01), pages 968-973; XIAOMING LI ET AL: "A Locally Quadratic Model of the Motion Estimation Error Criterion Function and Its Application to Subpixel Interpolations" February 1996 (1996-02), IEEE Transaction on Circuits and Systems for Video Technology; CHENG DU ET AL: "PPHPS: A Parabolic Prediction-Based, Fast Half-Pixel Search Algorithm for Very Low Bit-Rate Moving-Picture Coding" IEEE Transaction on Circuits and Systems for Video Technology vol. 13, no. 6, June 2003 (2003-06).

Such model-based sub-pixel motion vector estimation techniques, however, exhibit different accuracy depending on the compressed video. Thus, an appropriate model should be used to achieve higher compression efficiency. Since an error between models differs according to video signal characteristics, use of a single model involves a limitation. In order to increase the compression efficiency, therefore, it is necessary to use a model with a higher accuracy.

The present invention provides a method and an apparatus for encoding a video signal with improved compression efficiency by selecting one among a plurality of models to be used in sub-pixel motion estimation.

The present invention also provides a method and apparatus for increasing a bit rate by adaptively selecting a model according to video signal characteristics.

The above stated aspects as well as other aspects of the present invention will become clear to those skilled in the art upon review of the following description.

According to an aspect of the present invention, there is provided an encoding method for increasing compression efficiency using model switching in motion estimation of a sub-pixel, the encoding method including obtaining a motion vector of a pixel existing on a block, generating a plurality of motion estimation models using a value of the motion vector, comparing estimation errors of the plurality of motion estimation models with one another, and selecting one of the plurality of motion estimation models according to the comparing of the estimation errors, and performing sub-pixel motion estimation using the selected motion estimation model.

According to another aspect of the present invention, there is provided an encoder for increasing compression efficiency using model switching in motion estimation of a sub-pixel, the encoder including a pixel calculator obtaining a motion vector of a pixel existing on a block, a model calculator generating a plurality of motion estimation models using a value of the motion vector obtained from the pixel calculator, a model selector comparing estimation errors of the plurality of motion estimation models with one another, and selecting one of the plurality of motion estimation models according to the comparing of the estimation errors, and a motion estimator performing sub-pixel motion estimation using the selected motion estimation model.

The above and other features and advantages of the present invention will become more apparent by describing in detail preferred embodiments thereof with reference to the attached drawings, in which:

FIG. 1 illustrates conventional integer pixel and half pixel;
FIGS. 2A and 2B illustrate exemplary models used for half-pixel or quarter-pixel motion estimation using an integer pixel;
FIG. 3 is a flowchart showing an example of a process of calculating a motion vector of a sub-pixel using estimation models according to an exemplary embodiment of the present invention;
FIG. 4 is a block diagram showing a video encoder according to an exemplary embodiment of the present invention;
FIG. 5 illustrates a linear (LIN) model and a quadratic (QUAD) model obtained by calculating integer pixel motion vectors according to an exemplary embodiment of the present invention; and
FIG. 6 illustrates improved compression performance of videos depending on bit rates according to an exemplary embodiment of the present invention.

The present invention is described hereinafter with reference to flowchart illustrations of methods according to exemplary embodiments of the invention. It will be understood that each block of the flowchart illustrations and combinations of blocks in the flowchart illustrations can be implemented by computer program instructions. These computer program instructions can be provided to a processor of a general purpose computer, special purpose computer or other programmable data processing apparatuses to produce a machine, such that the instructions, which execute via the processor of the computer or other programmable data processing apparatuses, create means for implementing the functions specified in the flowchart block or blocks. These computer program instructions may also be stored in a computer usable or computer-readable memory that can direct a computer or other programmable data processing apparatuses to function in a particular manner such that the instructions stored in the computer usable or computer-readable memory produce an article of manufacture including instruction means that implement the function specified in the flowchart block or blocks. The computer program instructions may also be downloaded into a computer or other programmable data processing apparatuses, causing a series of operational steps to be performed on the computer or other programmable apparatuses to produce a computer implemented process such that the instructions that execute on the computer or other programmable apparatuses provide steps for implementing the functions specified in the flowchart block or blocks.

Each block of the flowchart illustrations may represent a module, segment or portion of code, which comprises one or more executable instructions for implementing the specified logical function(s). It should also be noted that in some alternative implementations the functions noted in the blocks may occur out of order. For example, two blocks shown in succession may in fact be executed almost concurrently or the blocks may sometimes be executed in reverse order, depending upon the functionality involved.

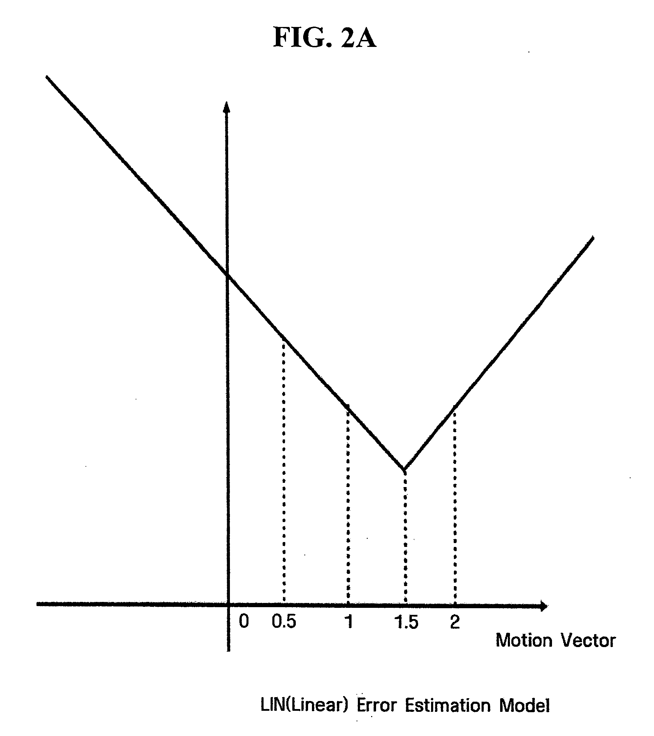

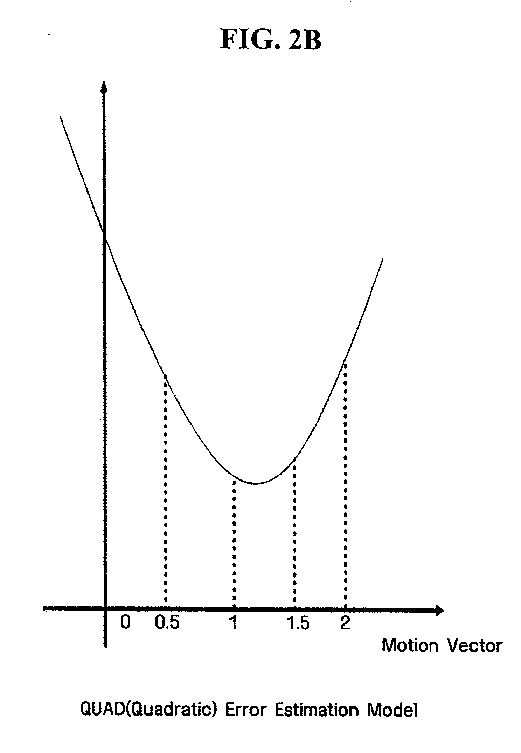

FIGS. 2A and 2B illustrate exemplary models used for half-pixel or quarter-pixel motion estimation using an integer pixel.

A linear (LIN) model shown in FIG. 2A is a model used to estimate an error between sub-pixels using a linear (LIN) equation model provided in Equation 2:

[Equation 2]

$$\varepsilon(x) = a\,|x\text{-}b| + c,\ a > 0,\ |b| < 0.5,\ c > 0,$$

whereas a quadratic model shown in FIG. 2B is a model used to estimate an error between sub-pixels using a second-order or quadratic (QUAD) equation model provided in Equation 3:

$$[\text{Equation 3}]$$

$$\varepsilon(x) = ax^2 + bx + c, \ (a > 0).$$

Since the model-based estimation method shown in FIG. 2A or 2B has a different accuracy depending on a compressed video, it is necessary to adaptively employ an appropriate model to achieve higher compression efficiency. For example, FIG. 2A illustrates a motion vector 1.5 estimated as an optimal value, while FIG. 2B illustrates a motion vector 1.0 estimated as an optimal value. At this time, if an error value of each model is estimated, it would be possible to increase the compression efficiency using a model having a higher accuracy.

To calculate a motion vector of a half pixel, error criterion values at the half pixel can be measured by interpolating error criterion values of a full pixel (integer pixel). Since a motion vector generally exists in horizontal and vertical directions, motion vector estimation can be performed in both directions.

For example, the LIN interpolation model or QUAD model shown in FIGS. 2A and 2B may be used. While it is possible to keep track of such estimation models mathematically, the compression efficiency thereof may differ depending on coding conditions. Referring to FIGS. 2A and 2B, the models can be implemented based on values of 0, 1, and 2. Accordingly, the estimation model values are encoded to then be transmitted to a decoder.

When a value of a sub-pixel such as a half pixel or a quarter-pixel is calculated using the model, the sub-pixel accuracy may depend upon the model selected. In addition, since the accuracy depends upon input data as well, it is quite important which model to select.

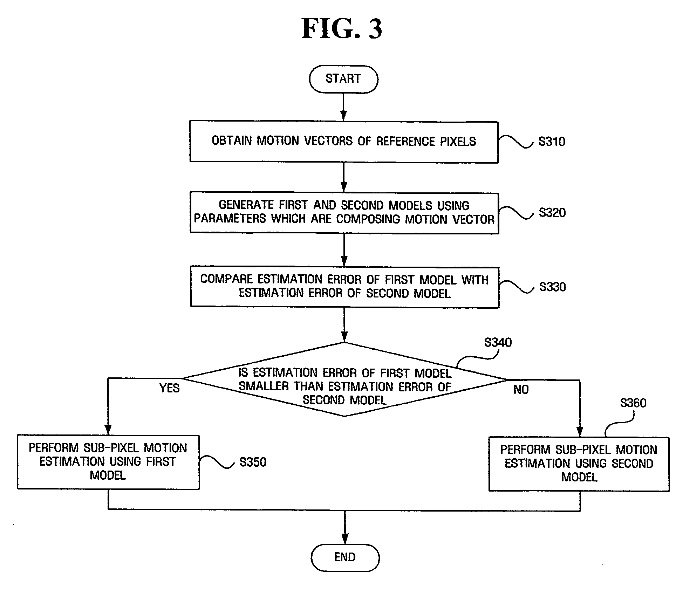

Therefore, as shown in FIG. 3, in order to search for a sub-pixel motion vector, model switching is adaptively performed. Then, the sub-pixel motion vector obtained from a higher accuracy model is encoded.

FIG. 3 is a flowchart showing an example of a process of calculating a sub-pixel motion vector using estimation models according to an exemplary embodiment of the present invention.

In operation S310, motion vectors of reference pixels are obtained. For example, in case of obtaining a motion vector of a half pixel, motion vectors of surrounding integer pixels as reference pixels are obtained. In case of obtaining a motion vector of a quarter-pixel, motion vectors of surrounding half pixels or integer pixels as reference pixels are obtained. Since a motion vector can be represented by x- and y-direction components, the procedure shown in FIG. 3 can be applied to x and y, respectively.

In operation S320, estimation models, i.e., first and second models, are generated using x and y values, i.e., the obtained motion vectors of the reference pixels. The estimation models may be a LIN model and a QUAD model, as shown in FIG. 2. To generate the estimation models, the equations for the respective models can be applied using x and y vector values of integer pixels that can be indexed.

The estimation models can be used in a wide variety of manners and two or more estimation models can be generated. Meanwhile, even a single estimation model may be regarded as two independent estimation models if it generates slightly different two or more models by being set with two or more parameters.

After generating two or more models, sub-pixel motion vectors to be searched in the respective models are estimated. Referring to graphs shown in FIGS, 2A and 2B, an error for motion vectors 0.5 and 1.5 can be computed using the integer pixel motion vectors of 0, 1, and 2. Then, an estimation error of the first model and an estimation error of the second model are compared with each other in operation S330. In operation S340, it is determined whether the estimation error of the first model is smaller than the estimation error of the second model or not. If it is determined that the estimation error of the first model is smaller than the estimation error of the second model, suggesting that the first model has higher accuracy, the first model is selected in performing sub-pixel motion estimation in operation S350.

If it is determined that the estimation error of the first model is greater than the estimation error of the second model, suggesting that the second model has higher accuracy, the second model is selected in performing sub-pixel motion estimation in operation S360.

The determination of model selection may be done for each sub-pixel, macroblock, or subblock. However, if the determination of model selection is often done to increase the accuracy, a computation amount may unduly increase. Accordingly, the optimal trade-off of encoding conditions is dependent on the computation amount and the accuracy.

In FIG. 3, an exemplary process of the model is described. For example, processing or generating model means calculating parameter of Equation 2 and Equation 3, and obtaining an applicable equation according to the given x value. So, it needs to calculate parameters a, b, and c in Equation 2 and Equation 3.

First, the LIN model can be implemented according to Equation 2. In Equation 2, x represents a value of 0, 1, or -1, and MAD error values $\varepsilon(-1)$, $\varepsilon(0)$, and $\varepsilon(1)$ at integer locations can be expressed in Equation 4:

[Equation 4]

$$\varepsilon(-1) = a + ab + c$$

$$\varepsilon(0) = ab + c, \text{ if } b < 0; \text{ and}$$

$$-ab + c, \text{ otherwise}$$

$$\varepsilon(1) = a - ab + c$$

Vector E, X, and A is necessary to calculate a, b and c. These vectors are defined in Equation 5 below. The vector E is represented with the MAD error value having x values of -1, 0 and 1, and the vector X is represented with a matrix of parameters of a, ab, and c. The relationship of the matrix can be expressed by E=XA.

[Equation 5]

$$E = \begin{bmatrix} \varepsilon(-1) & \varepsilon(0) & \varepsilon(1) \end{bmatrix}$$

$$X = \begin{bmatrix} 1 & 1 & 1 \\ 0 & 1 & 1 \\ 1 & -1 & 1 \end{bmatrix}$$

$$A = \begin{bmatrix} a & ab & c \end{bmatrix}$$

To deduce the Equation 2, the vector matrix can be written by Equation 6:

[Equation 6]

$$A = X^{-1}E = INV(X)E$$

$$= \begin{bmatrix} 1 & -1 & 0 \\ \frac{1}{2} & 0 & -\frac{1}{2} \\ \frac{1}{2} & 1 & \frac{1}{2} \end{bmatrix} \begin{bmatrix} \varepsilon(-1) \\ \varepsilon(0) \\ \varepsilon(1) \end{bmatrix}, \quad if \ b < 0$$

$$\begin{bmatrix} 0 & -1 & 1 \\ \frac{1}{2} & 0 & \frac{1}{2} \\ \frac{1}{2} & 1 & -\frac{1}{2} \end{bmatrix} \begin{bmatrix} \varepsilon(-1) \\ \varepsilon(0) \\ \varepsilon(1) \end{bmatrix}, \quad otherwise$$

The model parameters can be obtained according to Equation 7:

[Equation 7]

$$if \quad b < 0,$$

$$a = \varepsilon(-1) - \varepsilon(0)$$

$$b = \left\{ \tfrac{1}{2}\varepsilon(-1) - \tfrac{1}{2}\varepsilon(1) \right\} / a$$

$$c = \tfrac{1}{2}\varepsilon(-1) + \varepsilon(0) + \tfrac{1}{2}\varepsilon(1)$$

*otherwise*

$$a = -\varepsilon(0) + \varepsilon(1)$$

$$b = \left\{ \tfrac{1}{2}\varepsilon(-1) - \tfrac{1}{2}\varepsilon(1) \right\} / a$$

$$c = \tfrac{1}{2}\varepsilon(-1) + \varepsilon(0) - \tfrac{1}{2}\varepsilon(1)$$

Since the values of a, b and c are computed using Equation 7, the LIN model can be generated. Further, error values at other locations, for example, $\varepsilon(-2)$ and $\varepsilon(2)$, can also be calculated using the LIN model according to Equation 8:

[Equation 8]

$$\varepsilon(-2) = 2a + ab + c$$
$$\varepsilon(2) = 2a - ab + c$$

The QUAD model can be obtained in a manner similar to the above-described process. That is to say, error values at integer locations can be obtained by applying -1, 0 and 1 to the x value in Equation 3, as given by Equation 9:

[Equation 9]

$$\varepsilon(-1) = a - b + c$$

$$\varepsilon(0) = c$$

$$\varepsilon(1) = a + b + c$$

The vectors E, X and A given in Equation 5 are defined in Equation 10:

[Equation 10]

$$E = [\varepsilon(-1) \quad \varepsilon(0) \quad \varepsilon(1)]$$

$$X = \begin{bmatrix} 1 & -1 & 1 \\ 0 & 0 & 1 \\ 1 & 1 & 1 \end{bmatrix}$$

$$A = [a \quad b \quad c]$$

To deduce the Equation 3, the vector matrix can be written by Equation 11:

[Equation 11]

$$A = X^{-1}E = INV(X)E$$

$$= \begin{bmatrix} \frac{1}{2} & -1 & \frac{1}{2} \\ -\frac{1}{2} & 0 & \frac{1}{2} \\ 0 & 1 & 0 \end{bmatrix} \begin{bmatrix} \varepsilon(-1) \\ \varepsilon(0) \\ \varepsilon(1) \end{bmatrix}$$

The model parameters can be obtained according to Equation 12 below:

[Equation 12]

$$a = \tfrac{1}{2}\varepsilon(-1) - \varepsilon(0) + \tfrac{1}{2}\varepsilon(1)$$

$$b = -\tfrac{1}{2}\varepsilon(-1) + \tfrac{1}{2}\varepsilon((1)$$

$$c = \varepsilon(0)$$

The computed values of a, b and c are used in obtaining the QUAD model represented in Equation 3 and the error values at other locations, for example, $\varepsilon(-2)$ and $\varepsilon(2)$, can also be generated using the QUAD model according to Equation 13 below:

[Equation 13]

$$\varepsilon(-2) = 4a - 2b + c$$

$$\varepsilon(2) = 4a + 2b + c$$

The above-described processes are provided as only exemplary embodiments for obtaining an LIN model and a QUAD model, and changes or modifications of the process may be made according to the model used.

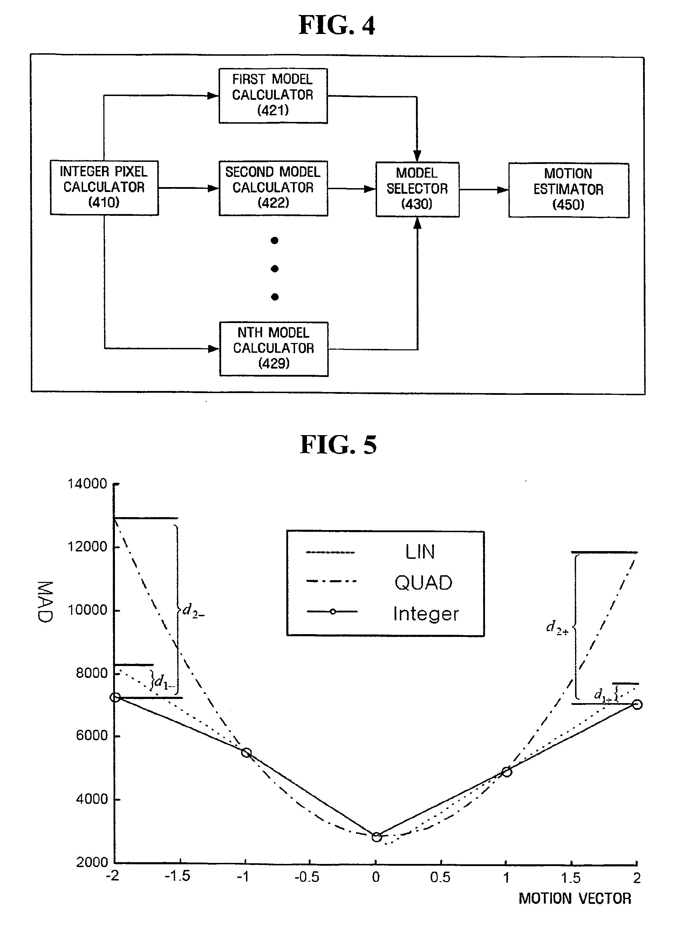

FIG. 4 is a block diagram showing a video encoder 400 according to an embodiment of the present invention.
The video encoder 400 shown in FIG. 4 performing encoding and quantization on a video signal and a detailed explanation of the configuration thereof will not be given. The video encoder 400 is constituted by an integer pixel calculator 410 as an exemplary pixel calculator calculating motion vectors of pixels existing in a block, a plurality of model calculators 421, 422, ..., and 429 calculating models using motion vector values of the integer pixel calculator 410, a model selector 430 comparing an estimation error between each of the models calculated by the model calculators 421, 422, ..., and 429 and selecting a model having a smaller estimation error, and a motion estimator 450 performing motion estimation according to the selected model.

The integer pixel calculator 410 calculates a motion vector of an integer pixel from an input video signal. Then, the motion vector of the integer pixel is used to estimate a sub-pixel motion vector. Of course, the integer pixel calculator 410 also calculates a motion vector of a half pixel and generates data used to estimate a quarter pixel motion vector according to the type of a sub-pixel. That is to say, the integer pixel calculator 410 is an example of an integer pixel calculator providing data necessary for estimating a smaller unit sub-pixel motion vector.

The first model calculator 421, the second model calculator 422, and the N-th model calculator 429 generate estimation models using the calculation result from the integer pixel calculator 410. In addition, the first model calculator 421, the second model calculator 422, and the N-th model calculator 429 calculate errors of half pixels to be obtained using the estimation models. Each model calculator may be independently implemented by model within an encoder. Also, there may be a model calculator capable of calculating a plurality of models using input integer pixel information.

The model selector 430 compares errors between each of motion vectors from the calculated plurality of models with one another and selects a model having the smallest error. The selected model having the smallest error is to be used later when encoding a half pixel or quarter pixel motion vector.

The motion estimator 450 estimates a motion vector of a sub-pixel such as a half pixel or a quarter pixel according to the selected model. The motion estimator 450 may perform motion estimation by frame, macroblock, or subblock, according to the selected model.

FIG. 5 illustrates a linear (LIN) model and a quadratic (QUAD) model obtained by calculating integer pixel motion vectors according to an exemplary embodiment of the present invention. In an exemplary embodiment of the present invention, one of two models having a smaller error may be selected. $d_m$ indicates a difference between an estimated value and a calculated value through the integer pixel search of the actual model, and m indicates each model. Here, the condition $m \in \{1 = LIN, 2 = QUAD\}$ is satisfied.

As shown in FIG. 5, differences $d_m$, $d_m$, and $d_{m+}$ can be expressed in Equation 14 below:

[Equation 14]

$$d_m = abs(d_{m-}) + abs(d_{m+})$$
$$= | y(-2) - \overline{y}(-2) | + | y(2) - \overline{y}(2) |$$

Model switching can be expressed as Equation 15:

[Equation 15]

$$m = \underset{m \in \{1 = LIN, 2 = QUAD\}}{\arg} \min(d_m)$$

A model having the smallest difference is selected at the current location and an estimation process is then performed.

In addition to the LIN and QUAD models, any one among a variety of models that has the smallest difference can be used for motion estimation. Furthermore, motion estimation can be performed over processing time by frame, macroblock, or subblock.

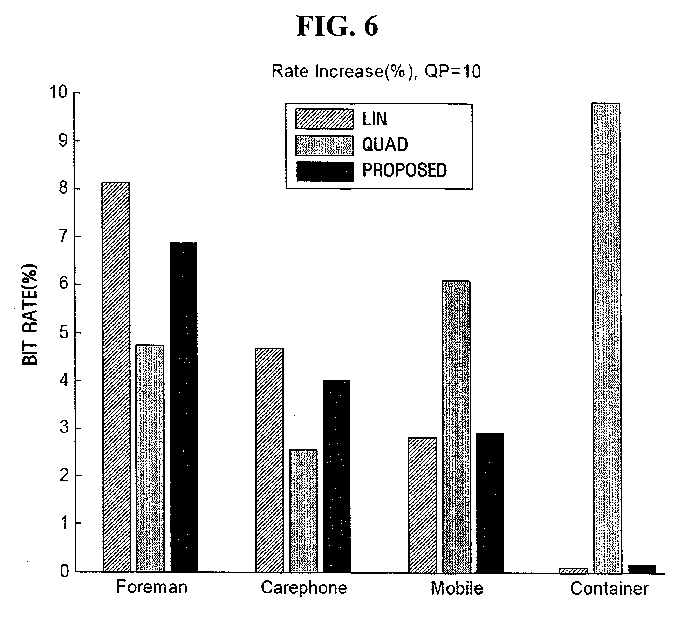

FIG. 6 illustrates improved compression performance of videos depending on bit rates according to an exemplary embodiment of the present invention. Referring to FIG. 6, video data have different bit rates for each of the LIN model and the QUAD model, respectively. For example, while a foreman video and a carephone video exhibit a higher bit rate in a case when using the LIN model compared to a case when using the QUAD model, a mobile video and a container video exhibit a higher bit rate in a case when using the QUAD model compared to a case when using the LIN model. Therefore, according to the exemplary embodiments of the present invention, a constant bit rate can be maintained.

As described above, the present invention provides for an apparatus and a method for encoding a video signal by selecting one among a plurality of models for estimating a sub-pixel motion vector.

In addition, the present invention allows a model to be adaptively selected according to characteristics of a video signal, thereby increasing compression efficiency.

Although exemplary embodiments of the present invention have been shown and described, the present invention is not limited to the described embodiments. Instead, it would be appreciated by those skilled in the art that changes may be made to the embodiments without departing from the scope of the invention as defined by the claims.

**Claims**

1. A motion estimation method, using model switching for motion estimation of a sub-pixel, comprising:

   obtaining motion vectors of a plurality of pixels;
   generating a plurality of motion estimation models using estimation errors of the obtained motion vectors;
   comparing estimation errors of a motion vector of a sub-pixel for each of the plurality of motion estimation models; and
   selecting one of the plurality of motion estimation models according to a result of the comparison of the estimation errors; and
   performing sub-pixel motion estimation using the selected motion estimation model.

2. The encoding method of claim 1, wherein the selected motion estimation model has a smallest estimation error among the plurality of motion estimation models.

3. The encoding method of claim 1 or 2, wherein the pixels are contained in respective pixel blocks, in which the pixel blocks are macroblocks or sub-blocks.

4. The encoding method of claim 1, 2 or 3 wherein the plurality of motion estimation models comprise at least one of a linear model and a quadratic model.

5. The encoding method of any one of the preceding claims, wherein when the pixels are integer pixels, and the sub-pixel is a half pixel or a quarter pixel.

6. The encoding method of any one of claims 1 to 4, wherein when the pixels are half pixels, and the sub-pixel is a quarter pixel.

7. A motion estimation encoder using model switching for motion estimation of a sub-pixel, the encoder comprising:

   a pixel calculator (410) for obtaining motion vectors of a plurality of pixels;
   a model calculator (421, 422, 429) for generating a plurality of motion estimation models using estimation errors of the obtained motion vectors obtained from the pixel calculator (410);
   a model selector (430) for comparing estimation errors of a motion vector of a sub-pixel for each of the plurality of motion estimation models, and for selecting one of the plurality of motion estimation models according to a result of the comparison of the estimation errors; and
   a motion estimator (450) for performing sub-pixel motion estimation using the selected motion estimation model.

8. The encoder of claim 7, wherein the selected motion estimation model has a smallest estimation error among the plurality of motion estimation models.

9. The encoder of claim 7 or 8, wherein the pixels are contained in respective pixel blocks, in which the pixel blocks are macroblocks or sub-blocks.

10. The encoder of claim 7, 8 or 9, wherein the plurality of motion estimation models comprise at least one of a linear model and a quadratic model.

11. The encoder of any one of claims 7 to 10, wherein when the pixels are integer pixels, and the sub-pixel is a half pixel or a quarter pixel.

12. The encoder of any one of claims 7 to 10, wherein when the pixels are half pixels, and the sub-pixel is a quarter pixel.

**Patentansprüche**

1. Bewegungs-Schätzverfahren, das Modellwechsel zur Bewegungsschätzung eines Teilpixels verwendet, wobei es umfasst:

   Ermitteln von Bewegungsvektoren einer Vielzahl von Pixeln;
   Erzeugen einer Vielzahl von Bewegungsschätz-Modellen unter Verwendung von Schätzfehlern der ermitteln Bewegungsvektoren;
   Vergleichen von Schätzfehlern eines Bewegungsvektors eines Teilpixels für jedes der Vielzahl von Bewegungsschätz-Modellen; und
   Auswählen eines der Vielzahl von Bewegungsschätz-Modellen entsprechend einem Ergebnis des Vergleichs der Schätzfehler; und
   Durchführen von Teilpixel-Bewegungsschätzung unter Verwendung des ausgewählten Bewegungsschätz-Modells.

2. Codierverfahren nach Anspruch 1, wobei das ausgewählte Bewegungsschätz-Modell einen kleinsten Schätzfehler unter der Vielzahl von Bewegungsschätz-Modellen hat.

3. Codierverfahren nach Anspruch 1 oder 2, wobei die Pixel in jeweiligen Pixelblöcken enthalten sind und die Pixelblöcke Makroblöcke oder Teilblöcke sind.

4. Codierverfahren nach Anspruch 1, 2 oder 3, wobei die Vielzahl von Bewegungsschätz-Modellen wenigstens ein lineares Modell oder ein quadratisches Modell umfassen.

5. Codierverfahren nach einem der vorangehenden Ansprüche, wobei die Pixel ganzzahlige Pixel sind und das Teilpixel ein Halbpixel oder ein Viertelpixel ist.

6. Codierverfahren nach einem der Ansprüche 1 bis 4, wobei die Pixel Halbpixel sind und das Teilpixel ein Viertelpixel ist.

7. Bewegungsschätz-Codiervorrichtung, die Modellwechsel zur Bewegungsschätzung eines Teilpixels verwendet, wobei die Codiervorrichtung umfasst:

   eine Pixel-Berechnungseinrichtung (410) zum Ermitteln von Bewegungsvektoren einer Vielzahl von Pixeln;
   eine Modell-Berechnungseinrichtung (421, 422, 429) zum Erzeugen einer Vielzahl von Bewegungsschätz-Modellen unter Verwendung von Schätzfehlern der von der Pixel-Berechnungseinrichtung (410) ermittelten Bewegungsvektoren;
   eine Modell-Auswähleinrichtung (430) zum Vergleichen von Schätzfehlern eines Bewegungsvektors eines Teilpixels für jedes der Vielzahl von Bewegungsschätz-Modellen und zum Auswählen eines der Vielzahl von Bewegungsschätz-Modellen entsprechend einem Ergebnis des Vergleichs der Schätzfehler; und
   eine Bewegungsschätzeinrichtung (450) zum Durchführen von Teilpixel-Bewegungsschätzung unter Verwendung des ausgewählten Bewegungsschätz-Modells.

8. Codierer nach Anspruch 7, wobei das ausgewählte Bewegungsschätz-Modell einen kleinsten Schätzfehler unter der Vielzahl von Bewegungsschätz-Modellen hat.

9. Codierer nach Anspruch 7 oder 8, wobei die Pixel in jeweiligen Pixelblöcken enthalten sind und die Pixelblöcke Makroblöcke oder Teilblöcke sind.

10. Codierer nach Anspruch 7, 8 oder 9, wobei die Vielzahl von Bewegungsschätz-Modellen wenigstens ein lineares Modell oder ein quadratisches Modell umfassen.

11. Codierer nach einem der Ansprüche 7 bis 10, wobei die Pixel ganzzahlige Pixel sind und das Teilpixel ein Halbpixel oder ein Viertelpixel ist.

12. Codierer nach einem der Ansprüche 7 bis 10, wobei die Pixel Halbpixel sind und das Teilpixel ein Viertelpixel ist.

**Revendications**

1. Procédé d'estimation de mouvement, utilisant une commutation de modèles en vue de l'estimation de mouvement d'un sous-pixel, comportant les étapes consistant à :

   obtenir des vecteurs de mouvement d'une pluralité de pixels ;
   générer une pluralité de modèles d'estimation de mouvement en faisant appel à des erreurs d'estimation des vecteurs de mouvement obtenus ;
   comparer les erreurs d'estimation d'un vecteur de mouvement d'un sous-pixel pour chaque modèle d'une pluralité de modèles d'estimation de mouvement ; et
   sélectionner l'un de la pluralité de modèles d'estimation de mouvement en fonction d'un résultat de la comparaison des erreurs d'estimation ; et
   mettre en oeuvre une estimation de mouvement de sous-pixel en faisant appel au modèle d'estimation de mouvement sélectionné.

2. Procédé de codage selon la revendication 1, dans lequel le modèle d'estimation de mouvement sélectionné présente l'erreur d'estimation la plus petite parmi la pluralité de modèles d'estimation de mouvement.

3. Procédé de codage selon la revendication 1 ou 2, dans lequel les pixels sont inclus dans des blocs de pixels respectifs, les blocs de pixels étant des macroblocs ou des sous-blocs.

4. Procédé de codage selon la revendication 1, 2 ou 3, dans lequel la pluralité de modèles d'estimation de mouvement comporte au moins un modèle linéaire et un modèle quadratique.

5. Procédé de codage selon l'une quelconque des revendications précédentes, dans lequel lorsque les pixels sont des pixels entiers, le sous-pixel représente un demi-pixel ou un quart de pixel.

6. Procédé de codage selon l'une quelconque des revendications précédentes, dans lequel lorsque les pixels sont des demi-pixels, le sous-pixel représente un quart de pixel.

7. Codeur d'estimation de mouvement utilisant une commutation de modèle pour l'estimation de mouvement d'un sous-pixel, le codeur comportant :

   un calculateur de pixels (410) pour obtenir des vecteurs de mouvement d'une pluralité de pixels ;
   un calculateur de modèles (421, 422, 429) pour générer une pluralité de modèles d'estimation de mouvement en utilisant des erreurs d'estimation des vecteurs de mouvement obtenus à partir du calculateur de pixels (410) ;
   un sélecteur de modèle (430) pour comparer les erreurs d'estimation d'un vecteur de mouvement d'un sous-pixel pour chaque modèle d'une pluralité de modèles d'estimation de mouvement, et pour sélectionner l'un de la pluralité de modèles d'estimation de mouvement en fonction d'un résultat de la comparaison des erreurs d'estimation ; et
   un estimateur de mouvement (450) pour mettre en oeuvre une estimation de mouvement de sous-pixel en faisant appel au modèle d'estimation de mouvement sélectionné.

8. Codeur selon la revendication 7, dans lequel le modèle d'estimation de mouvement sélectionné présente l'erreur d'estimation la plus petite parmi la pluralité de modèles d'estimation de mouvement.

9. Codeur selon la revendication 7 ou 8, dans lequel les pixels sont inclus dans des blocs de pixels respectifs, les blocs de pixels étant des macroblocs ou des sous-blocs.

10. Codeur selon la revendication 7, 8 ou 9, dans lequel la pluralité de modèles d'estimation de mouvement comporte au moins un modèle linéaire et un modèle quadratique.

11. Codeur selon l'une quelconque des revendications 7 à 10, dans lequel lorsque les pixels sont des pixels entiers, le sous-pixel représente un demi-pixel ou un quart de pixel.

12. Codeur selon l'une quelconque des revendications 7 à 10, dans lequel lorsque les pixels sont des demi-pixels, le sous-pixel représente un quart de pixel.

# FIG. 1

# FIG. 2A

LIN(Linear) Error Estimation Model

# FIG. 2B

QUAD(Quadratic) Error Estimation Model

# FIG. 3

START

OBTAIN MOTION VECTORS OF REFERENCE PIXELS — S310

GENERATE FIRST AND SECOND MODELS USING PARAMETERS WHICH ARE COMPOSING MOTION VECTOR — S320

COMPARE ESTIMATION ERROR OF FIRST MODEL WITH ESTIMATION ERROR OF SECOND MODEL — S330

S340

IS ESTIMATION ERROR OF FIRST MODEL SMALLER THAN ESTIMATION ERROR OF SECOND MODEL

YES

NO

S360

PERFORM SUB-PIXEL MOTION ESTIMATION USING FIRST MODEL — S350

PERFORM SUB-PIXEL MOTION ESTIMATION USING SECOND MODEL

END

# FIG. 4

# FIG. 5

# FIG. 6

Rate Increase(%), QP=10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUH, J.W. ; JECHANG JEONG.** Fast sub-pixel motion estimation techniques having lower computational complexity. *IEEE Transaction on Consumer Electronics,* 01 August 2004, vol. 50 (3), 968-973
- **XIAOMING LI et al.** A Locally Quadratic Model of the Motion Estimation Error Criterion Function and Its Application to Subpixel Interpolations. *IEEE Transaction on Circuits and Systems for Video Technology,* February 1996

- **CHENG DU et al.** PPHPS: A Parabolic Prediction-Based, Fast Half-Pixel Search Algorithm for Very Low Bit-Rate Moving-Picture Coding. *IEEE Transaction on Circuits and Systems for Video Technology,* June 2003, vol. 13 (6